# EUROPÄISCHE PATENTANMELDUNG

(11) **EP 4 516 416 A1**
(43) Veröffentlichungstag der Anmeldung: **05.03.2025**
(21) Anmeldenummer: 24196790.0
(22) Anmeldetag: 27.08.2024
(51) Int. Cl.: B07C 5/36, B25J 11/00, B25J 15/00

(54) **GREIFEREINRICHTUNG, VERWENDUNG UND VERFAHREN**

(30) Priorität: 29.08.2023 DE 102023123172
(71) Anmelder: Neubauer, Christoph, 59514 Welver (DE); Neubauer, Felix, 59514 Welver (DE)
(72) Erfinder: Neubauer, Christoph, 59514 Welver (DE); Neubauer, Felix, 59514 Welver (DE)
(74) Vertreter: Fritz Patent- und Rechtsanwälte PartmbB

(57) **Zusammenfassung**

Die Erfindung betrifft eine Greifereinrichtung (6) zur Handhabung von stangenförmigen Gemüsestücken (20), insbesondere Spargelstangen (20), eine Verwendung der Greifereinrichtung (6) und ein Verfahren zur Handhabung einer vordefinierten Menge an stangenförmigen Gemüsestücken (20). Die Greifereinrichtung (6) umfasst einen Greiferkörper (7); und wenigstens ein Greiferarm (8), wobei der Greiferarm (8) verschwenkbar an dem Greiferkörper (7) aufgenommen ist; und wenigstens mit dem Greiferkörper (7) einen Aufnahmeraum (11) zur Aufnahme des stangenförmigen Gemüses (20) bildet; und wenigstens eine Aktuatoreinheit (7a) zur Durchführung einer Schwenkbewegung zwischen einem offenen Zustand (6a) und einem geschlossenen Zustand (6b) des Greiferarms (8).

Der Greifarm (8) ist so ausgebildet, dass wenigstens eine vordefinierte Menge (20a) an im Wesentlichen gleichförmig ausgerichteten stangenförmigen Gemüsestücken (20) durch die Schwenkbewegung vollständig in dem Aufnahmeraum (11) aufnehmbar ist.

## Beschreibung

Die vorliegende Erfindung betrifft eine Greifereinrichtung zur Handhabung von stangenförmigen Gemüsestücken, insbesondere Spargelstangen, eine Verwendung der Greifereinrichtung und ein Verfahren zur Handhabung.

Bei der Ernte und Weiterverarbeitung von stangenförmigem Gemüsestücken, wie Spargel, Gurken, Möhren, Sellerie und dergleichen werden immer mehr Maschinen eingesetzt, um die Kosten für die Verbraucher zu senken und gleichzeitig die Qualität der Verarbeitungsprozesse zu erhöhen.

Aus dem Stand der Technik sind verschiedene Greifereinrichtungen zur Handhabung von stangenförmigem Gemüsestücken bekannt geworden. Es sind vor allem solche Greifereinrichtungen bekannt geworden, welche einzelne Gemüsestücke von einem Baum, einer Pflanze oder auch aus der Erde ernten und in einem Sammelbehälter oder auf einem Fließband ablegen können. Die Greifereinrichtungen werden beispielsweise anhand der Informationen von Kamerasystemen gesteuert und können dadurch besonders genau positioniert werden. Die Greifereinrichtungen können die geerntete Gemüsestücke beispielsweise auf einem Transportband ablegen.

Nach der Ernte müssen die Gemüsestücke gewaschen und gegebenenfalls beschnitten und sortiert und klassifiziert und zu verkaufsfertigen Einheiten kommissioniert werden. Oft finden solche Weiterverarbeitungsprozesse nicht direkt auf dem Feld statt, sodass die geernteten Gemüsestücke in Behältern gesammelt werden. Für einzelne Weiterverarbeitungsschritte existieren oft einzelne Weiterverarbeitungsmaschinen. Aufgrund der komplexen Bewegungsabläufe und der erforderlichen Handhabungsgeschwindigkeiten erfolgen eine Beschickung und eine Entnahme von Weiterverarbeitungsmaschinen erfolgen oft von Hand durch Erntehelfer. Vor allem beim Auflegen oder Vorsortieren der Gemüsestücke aus den Sammelbehältern und beim Kommissionieren zu verkaufsfertigen Einheiten, wie Bündeln, und wieder Verpacken in Transportboxen oder dergleichen ist weiterhin ein großer Anteil an menschlicher Arbeitsleistung durch Erntehelfer notwendig.

Neuinvestitionen in bereits vollautomatisierte Weiterverarbeitungsmaschinen sind kostspielig und stellen ein hohes Investitionsrisiko für Landwirte dar. Ein höherer Grad der Automatisierung lohnt sich für den Landwirt nur, wenn eine Neuanschaffung einer automatisierten Weiterverarbeitungsmaschine eine entsprechende Anzahl an Erntehelfern effektiv einspart. Dabei muss auch berücksichtigt werden, dass vor allem Stillstände oder Defekte oder fehlende Ersatzteile in der Erntezeit zu großen wirtschaftlichen Einbußen führen können, wenn die geernteten Gemüsestücke nicht termingerecht verarbeitet werden können.

Es ist deshalb die Aufgabe der vorliegenden Erfindung Möglichkeiten zur Verfügung zu stellen, um eine kostengünstige Automatisierung wenigstens von Weiterverarbeitungsprozessen von geernteten Gemüsestücken zu ermöglichen. Insbesondere ist es die Aufgabe der vorliegenden Erfindung ein wirtschaftliches Investitionsrisiko in Automatisierungsvorrichtungen für Landwirte gering zu halten.

Die Aufgabe wird durch eine Greifereinrichtung mit den Merkmalen nach Anspruch 1, eine Verwendung der Greifereinrichtung nach Anspruch 12 sowie ein Verfahren zur Handhabung von stangenförmigen Gemüsestücken nach Anspruch 13 gelöst. Vorteilhafte Weiterbildungen sind Gegenstand der Unteransprüche. Weitere Eigenschaften und Merkmale ergeben sich aus der allgemeinen Beschreibung und aus der Beschreibung der Ausführungsbeispiele.

Die erfindungsgemäße Greifereinrichtung zur Handhabung wenigstens von einer Mehrzahl an stangenförmigen Gemüsestücken, insbesondere Spargelstangen, umfasst:
- einen Greiferkörper; und
- wenigstens ein Greiferarm, wobei der Greiferarm verschwenkbar an dem Greiferkörper aufgenommen ist; und wenigstens mit dem Greiferkörper einen Aufnahmeraum zur Aufnahme der stangenförmigen Gemüsestücke bildet; und
- insbesondere wenigstens eine Aktuatoreinheit zur Durchführung einer Schwenkbewegung zwischen einem offenen Zustand und einem geschlossenen Zustand des Greiferarms.
Der Greifarm ist so ausgebildet, dass wenigstens die Mehrzahl, und insbesondere eine vordefinierte Menge, an im Wesentlichem gleich ausgerichteten stangenförmigen Gemüsestücken durch die Schwenkbewegung, insbesondere von dem offenen Zustand in den geschlossenen Zustand vollständig in dem Aufnahmeraum aufnehmbar ist. Vorteilhaft ist eine Handhabung der Mehrzahl an stangenförmigen Gemüsestücken möglich.

Die Erfindung hat viele Vorteile. Ein erheblicher Vorteil der Greifereinrichtung ist, dass eine vordefinierte Menge einer Mehrzahl an stangenförmigen Gemüsestücken, insbesondere bündelförmig oder als Bündel, beim Verschwenken in einen geschlossenen Zustand der Greifervorrichtung in dem Aufnahmeraum aufgenommen werden kann und handhabbar ist. Dadurch kann die Greifereinrichtung vor allem für Handhabungsoperationen, wie einem Auflegen oder einen Entnehmen, von vordefinierten Mengen an einer Weiterverarbeitungsmaschine nutzbar, wie vorgegebenen Stückzahlen und/oder abgewogenen Mengen von stangenförmigen Gemüsestücken, welche bisher an einer Weiterverarbeitungsmaschine durch Erntehelfer durchgeführt werden mussten. Dadurch können auch vorhandene Weiterverarbeitungsmaschinen modular automatisiert werden. Weiterhin kann die vorhandene Weiterverarbeitungsmaschine als solche erhalten bleiben und auch bei einem Defekt der Greifereinrichtung weiterhin direkt durch Erntehelfer bedient werden. Im Ergebnis wird Investitionssrisiko minimiert.

Vorteilhaft sind die stangenförmigen Gemüsestücke im Wesentlichen gleich, insbesondere zueinander, ausgerichtet, wenn sich die stangenförmigen Gemüsestücke im Wesentlichen entlang einer Richtung und vorzugsweise, vorzugsweise wenigstens im Wesentlichen, parallel zueinander, erstrecken und/oder ausgerichtet sind. Insbesondere weisen die stangenförmigen Gemüsestücke hierbei eine im Wesentlichen gleichförmige Orientierung zueinander auf.

Besonders vorteilhaft bildet eine Mehrzahl an stangenförmigen Gemüsestücken eine vordefinierte Menge, wie ein vorgegebenes Gewicht, wie ein Verkaufsgewicht für einen Verbraucher, oder auch eine vorgegebene Stückzahl an Gemüsestücken, insbesondere innerhalb eines Toleranzbereichs.

Bevorzugt ist der Greiferarm wenigstens bereichsweise schaufelförmig ausgebildet ist. Insbesondere ist der Greiferarm wenigstens teilweise gebogen ausgebildet und/oder umfasst den Aufnahmeraum wenigstens teilweise. Insbesondere weist der Greiferarm eine nach innen in Richtung des Aufnahmeraums gewölbte und/oder gebogene Geometrie auf. Vorteilhaft werden dadurch eine verbesserte Aufnahme und/oder Förderung der stangenförmigen Gemüsestücke in den Aufnahmeraum ermöglicht, sodass vorteilhaft alle Gemüsestücke, wie insbesondere Spargelstangen, sicher in dem Aufnahmeraum aufnehmbar sind.

Besonders bevorzugt weist der Greiferarm einen beweglichen Endbereich auf. Vorzugsweise ist der bewegliche Endbereich separat bewegbar und insbesondere verschwenkbar. Vorzugsweise kann die Schwenkbewegung von einem offenen Zustand in einen geschlossenen Zustand durch den beweglichen Endbereich so unterstützt werden, dass alle stangenförmigen Gemüsestücke in den Aufnahmeraum aufgenommen und/oder gefördert werden.

Insbesondere umfasst die Greifereinrichtung zwei Greiferarme, wobei beide Greiferarme verschwenkbar an dem Gehäusekörper aufgenommen sind und mit dem Greiferkörper den Aufnahmeraum bilden. Vorzugsweise sind wenigstens zwei Aktuatoreinheiten vorhanden, sodass eine separate Verschwenkung und/oder Ansteuerung der Greiferarme und/oder der beweglichen Endbereiche möglich ist.

Vorzugsweise umfasst die Greifereinrichtung wenigstens eine Spanneinheit mit wenigstens einem Spannelement und insbesondere einer Mehrzahl an Spannelementen zur Aufbringung einer Haltekraft, insbesondere auf die aufgenommenen stangenförmigen Gemüsestücke. Insbesondere werden die aufgenommenen stangenförmigen Gemüsestücke wenigstens teilweise mittels der Haltekraft gegen die Greiferarme und/oder den Greiferkörper gedrückt und vorzugsweise verspannt und/oder festgeklemmt. Vorteilhaft werden die stangenförmigen Gemüsestücke durch die Haltekraft in dem Aufnahmeraum gehalten und fixiert. Weiter vorteilhaft wird durch die Haltekraft sichergestellt, dass die stangenförmigen Gemüsestücke fest in dem Aufnahmeraum gehalten werden, sodass diese auch bei hohen Beschleunigungen und/oder Geschwindigkeiten der Greifereinrichtung nicht aus dem Aufnahmeraum herausfallen.

Insbesondere ist wenigstens ein Spannelement als elastisch biegsames Band ausgebildet. Vorzugsweise weist das Band ein erstes Ende und ein zweites Ende auf. Vorzugsweise weist das Band eine gleichförmige Breite zwischen dem ersten Ende und dem zweiten Ende auf. Insbesondere erstreckt sich das Band bogenförmig durch den Aufnahmeraum und ist an dem ersten und an dem zweiten Ende mit dem Greiferkörper mittelbar oder unmittelbar verbunden, um die Haltekraft aufzubringen. Vorteilhaft wird eine Haltekraft durch eine Materialsteifigkeit und die Form vorgegeben.

Bevorzugt ist das Band wenigstens teilweise aus einem Kunststoff, insbesondere einem Elastomer, ausgebildet. Vorzugsweise ist das Band durch ein additives Fertigungsverfahren, wie 3D-Druck, hergestellt. Dadurch können besonders komfortabel auch Bänder mit veränderlichen Formen, wie insbesondere variabler Materialstärke besonders komfortabel hergestellt werden. Vorteilhaft ist der Kunststoff für den Lebensmittelbereich geeignet. Alternativ können auch andere Fertigungsverfahren wie Spritzgießen oder dergleichen zur Herstellung genutzt werden.

Vorzugsweise verändert sich eine Steifigkeit des elastischen Bands wenigstens, vorzugsweise in einem Bereich, zwischen einem ersten Ende und einem zweiten Ende des Bands. Vorzugsweise ist eine Steifigkeit durch eine Materialsteifigkeit und/oder eine, insbesondere geometrische, Form des Bandes vorgegeben. Insbesondere kann eine Steifigkeit durch eine Einstellung der Form, insbesondere an wenigstens einer Stelle zwischen dem ersten Ende und dem zweiten Ende des Bandes, eingestellt werden. Vorteilhaft kann eine Form durch eine veränderliche Breite des Bandes zwischen dem ersten Ende und dem zweiten Ende durch Ausschnitte und/oder Öffnungen in dem Band angepasst werden. Insbesondere sind wenigstens ein oder mehrere Ausschnitte und/oder wenigstens eine oder mehrere Öffnungen wenigstens teilweise mehreckig und/oder rund ausgebildet. Insbesondere ist eine Materialstärke zwischen dem ersten Ende und dem zweiten Ende veränderlich. Vorzugsweise kann das Band in einer Mitte zwischen dem ersten Ende und dem zweiten Ende eine deutlich größere Materialstärke aufweisen als an dem ersten Ende und/oder dem zweiten Ende. Insbesondere kann eine Materialstärke in der Mitte zwischen dem ersten Ende und dem zweiten Ende auch deutlich geringer sein als die Materialstärke zwischen an dem ersten Ende und/oder dem zweiten Ende. Vorteilhaft kann eine Steifigkeit des Bandes dadurch so angepasst werden, dass sich das Band zum Aufbringen der Haltekraft flexibel um eine Kontur der Mehrzahl von stangenförmigen Gemüsestücken legen kann und gleichzeitig vorteilhaft eine Haltekraft auf die stangenförmigen Gemüsestücke aufbringt.

Vorzugsweise kann in den Kunststoff eine Einlage, wie ein Metalldraht oder dergleichen, eingelegt und/oder eingebettet werden. Vorteilhaft kann dadurch eine gewünschte Materialsteifigkeit besonders genau an die erforderlichen Bedingungen oder Vorgaben angepasst werden, wie insbesondere eine gewünschte Steifigkeit des Bandes.

Insbesondere umfasst die Greifereinrichtung eine Einstelleinheit zur Einstellung einer Position wenigstens eines Spannelements innerhalb des Aufnahmeraums zur Anpassung der Haltekraft. Vorteilhaft sind wenigstens ein Spannelement oder mehrere Spannelemente an der Einstelleinheit aufgenommen. Insbesondere sind mehrere Spannelemente nebeneinander in einer Ebene nebeneinander und/oder wenigstens teilweise hintereinander angeordnet. Vorteilhaft weist die Einstelleinheit eine separate Aktuatoreinheit auf, insbesondere eine Servoeinheit. Vorzugsweise ist durch die Einstelleinheit wenigstens eine Position des ersten Ende und/oder des zweiten Endes eines als Band ausgebildeten Spannelements innerhalb des Aufnahmeraus veränderlich. Dadurch kann eine durch das Spannelement aufgebrachte Haltekraft vergrößert und/oder verringert werden. Darüber hinaus kann das Spannelement insbesondere zum Aufnehmen und/oder Ablegen der stangenförmigen Gemüsestücke weg von den Greiferarmen bewegt werden, so dass das Spannelement beim Aufnehmen oder Ablegen nicht hinderlich ist.

Bevorzugt ist die Greifereinrichtung ausgebildet als Gemüsegreifereinrichtung für stangenförmige Gemüsestücke. Besonders bevorzugt ist die Greifereinrichtung ausgebildet als Spargelgreifereinrichtung zum Handhaben von als Spargelstangen ausgebildeten Gemüsestücken. Insbesondere sind die geometrischen Abmessungen der Greiferarme und des Aufnahmeraums zum Greifen und Handhaben von Gemüsestücken und insbesondere Spargelstangen angepasst.

Vorzugsweise ist die Greifereinrichtung umfasst von einer Vorrichtung zur Weiterverarbeitung von stangenförmigen Gemüsestücken, bevorzugt wenigstens einer automatisierten Entnahmeeinrichtung für eine Spargelsortiermaschine und besonders bevorzugt einer Spargelsortiermaschine mit einer automatisierten Entnahmeeinrichtung. Vorteilhaft kann durch die Greifereinrichtung wenigstens eine Entnahme von stangenförmigen Gemüsestücken und insbesondere von Spargelstangen aus Entnahmefächern der Spargelsortiermaschine automatisiert werden. Vorteilhaft umfasst die automatisierte Entnahmeeinrichtung wenigstens eine Robotereinrichtung, vorzugsweise mit wenigstens einem Roboterarm, an welcher die Greifereinrichtung vorzugsweise aufgenommen ist. Insbesondere ist wenigstens eine Mehrzahl an Spargelstangen, insbesondere eine vordefinierte Menge an Spargelstangen, durch die Greifereinrichtung aufnehmbar und handhabbar. Insbesondere wird die vordefinierte Menge durch die Spargelsortiermaschine sortiert und abgewogenen und zur Entnahme in einem Entnahmefach bereitgestellt. Vorzugsweise können durch die Greifereinrichtung, insbesondere aus dem Entnahmefach, aufgenommene Gemüsestücke an einem Zielort, wie einem Sammelbehälter, abgelegt werden, wobei eine Ausrichtung während der Handhabung der Mehrzahl stangenförmigen Gemüsestücke im Wesentlichen erhalten bleibt.

Vorteilhaft kann durch die Greifereinrichtung eine Entnahme von sortierten Gemüsestücken in vordefinierter Menge aus einem Entnahmefach der Weiterverarbeitungsmaschine erfolgen. Besonders vorteilhaft kann die Greifereinrichtung direkt so eingesetzt werden wie der Erntehelfer und eine Mehrzahl von Spargelstangen, insbesondere als Bündel, aus Entnahmefächern der Spargelsortiermaschine entnehmen. Die Greifereinrichtung kann dadurch einen Erntehelfer wenigstens ersetzen. Vorteilhaft können dadurch die Kosten für die Weiterverarbeitung des Spargels erheblich gesenkt werden. Weiter muss eine vorhandene und durch Erntehelfer betriebene Spargelsortiermaschine nicht umgebaut werden. Dadurch sind Investitionskosten für einen Landwirt überschaubar. Weiter kann die Spargelsortiermaschine bei einem Defekt der Greifereinrichtung wieder effektiv Erntehelfer betrieben werden. Darüber hinaus ist die Greifereinrichtung vorteilhaft auch zum Auflegen von Gemüsestücken, insbesondere Spargelstangen, auf eine Weiterverarbeitungsmaschine, wie eine Spargelsortiermaschine oder eine der Spargelsortiermaschine nachgeschaltete Weiterverarbeitungsmaschine oder dergleichen, nutzbar. Weitere Anwendungen der Greifereinrichtung sind denkbar.
Bei der erfindungsgemäßen Verwendung wird die zuvor beschriebene Greifereinrichtung zur Handhabung einer Mehrzahl von, insbesondere im Wesentlichen gleich ausgerichteten, stangenförmigen Gemüsestücken und insbesondere Spargelstangen verwendet.

Auch die erfindungsgemäße Verwendung hat viele Vorteile. Ein erheblicher Vorteil der Verwendung liegt darin, dass ein Handhabungsprozess einer Mehrzahl an stangenförmigen Gemüsestücken, insbesondere in einer vordefinierten Menge, automatisierbar ist, welche bisher aufgrund Ihrer Komplexität durch einen Erntehelfer durchgeführt musste. Vorteilhaft können dadurch auch durch Erntehelfer betriebene Weiterverarbeitungsmaschinen modular automatisiert werden. Weitere Vorteile und Merkmale der Verwendung ergeben sich aus der gesamten allgemeinen Beschreibung und aus der Beschreibung der Ausführungsbeispiele.

Das erfindungsgemäße Verfahren zur Handhabung einer Mehrzahl an im Wesentlichen gleich ausgerichteten stangenförmigen Gemüsestücken, insbesondere einer vordefinierten Menge an stangenförmigen Gemüsestücken, insbesondere von Spargelstangen, mittels einer Greifereinrichtung umfassend einen Greiferkörper; und wenigstens einen Greiferarm, wobei der Greiferarm schwenkbar an dem Greiferkörper ausgenommen ist; und wenigstens eine Aktuatoreinheit zur Durchführung einer Schwenkbewegung zwischen einem offenen Zustand und einem geschlossenen Zustand des Greiferarms, wobei der Greifarm so ausgebildet ist, dass eine vordefinierte Menge an im Wesentlichen gleichförmig ausgerichteten stangenförmigen Gemüsestücken durch die Schwenkbewegung in dem Aufnahmeraum aufnehmbar ist, sodass eine Handhabung der vordefinierten stangenförmigen Gemüsestücke möglich ist, umfasst wenigstens die nachstehenden Verfahrensschritte:
- bereitstellen von einer Mehrzahl an stangenförmigen Gemüsestücken, insbesondere in vordefinierter Menge, vorzugsweise in liegender Position; und
- positionieren des Greifereinrichtung oberhalb der definierten Menge an stangenförmigen Gemüsestücken; und
- insbesondere Durchführung einer Schwenkbewegung des wenigstens einen Greiferarms in einen offenen Zustand;
- positionieren des Aufnahmeraums der Greifereinrichtung an der Menge zu dem stangenförmigen Gemüsestücken, sodass der Greiferarm im offenen Zustand und der Greiferkörper der stangenförmigen Gemüsestücke wenigstens teilweise umfassen und/oder umschließen; und
- Durchführung einer Schwenkbewegung des Greiferarms in eine geschlossenen Zustand, sodass die vordefinierte Menge stangenförmigen Gemüsestücke in den Aufnahmeraum transportiert und aufgenommen werden; und
- insbesondere Handhabung der vordefinierten Menge an stangenförmigen Gemüsestücken und insbesondere Spargelstangen.
Auch das erfindungsgemäße Verfahren hat viele Vorteile. Ein erheblicher Vorteil des Verfahrens ist, dass eine vordefinierte Menge an stangenförmigen Gemüsestücken durch automatisiert handhabbar ist. Vorteilhaft liegen die stangenförmigen Gemüsestücke in einem Sammelbereich, wie einem Entnahmefach, einer Spargelsortiermaschine. Vorteilhaft erstecken sich Mittelachsen im Liegen im Wesentlichen parallel zu einer Liegefläche. Vorteilhaft umfasst eine Handhabung der vordefinierten Menge an stangenförmigen Gemüsestücken eine Bewegung der Greifereinrichtung im Raum insbesondere zu einem Zielort, wie einem Sammebehälter.

Bevorzugt wird auf die in dem Aufnahmeraum aufgenommenen stangenförmigen Gemüsestücke wenigstens durch ein Spannelement einer Spanneinheit eine Haltekraft aufgebacht. Vorteilhaft wird durch die Haltekraft eine Handhabung mit hoher Beschleunigung und/oder Geschwindigkeit ermöglicht, ohne dass die stangenförmigen Gemüsestücke aus dem Aufnahmeraum der Greifereinrichtung herausfallen. Vorzugsweise wird die Haltekraft nach Handhabung und insbesondere vor der Verschwenkung des Greiferarms in einen offenen Zustand wieder zurückgenommen, sodass die stangenförmigen Gemüsestücke und insbesondere die Spargelstangen an einem Zielort, wie einem Sammelbehälter, abgelegt werden können.

Insbesondere erfolgt wenigstens eine Entnahme aus wenigstens einem Entnahmefach einer Spargelsortiermaschine. Vorzugsweise erfolgt eine Handhandhabung der Menge an stabförmigen Gemüsestücken zu einem Zielort, insbesondere zu einem Sammelbehälter, und bevorzugt Verschwenkung des Greiferarms in einen offenen Zustand, sodass die stabförmigen Gemüsestücke vollständig an dem Zielort, insbesondere in dem Sammelbehälter, abgelegt werden.

Weitere Merkmale und Vorteile des erfindungsgemäßen Verfahrens ergeben sich aus der gesamten allgemeinen Beschreibung und aus der Beschreibung der Ausführungsbeispiele.

Weitere Merkmale und Vorteile von Ausführungsbeispielen der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1: eine schematische Frontansicht einer erfindungsgemäßen Greifereinrichtung;
- Fig. 2: eine rein schematische Seitenansicht der erfindungsgemäßen Greifereinrichtung;
- Fig. 3: eine schematische Prinzipskizze zur Darstellung der Funktion der Spanneinheit;
- Fig. 4: eine rein schematische Ansicht eines als Band ausgebildeten Spannelements;
- Fig. 5: eine schematische Frontansicht einer als Spargelsortiermaschine ausgebildeten Weiterverarbeitungsmaschine mit einer Entnahmeeinrichtung mit einer Robotereinrichtung und einer erfindungsgemäßen Greifereinrichtung;
- Fig. 6: eine schematische Frontansicht der Greifereinrichtung, welche an einer Robotereinrichtung einer Entnahmeeinrichtung aufgenommen ist; und
- Fig. 7: eine schematische perspektivische Ansicht der Greifereinrichtung, welche an der Robotereinrichtung der Entnahmeeinrichtung aufgenommen ist.

Es ist nicht notwendig, dass eine erfindungsgemäße Vorrichtung alle nachfolgend beschriebenen Merkmale aufweist. Es ist auch möglich, dass eine erfindungsgemäße Greifereinrichtung nur einzelne Merkmale der nachfolgend beschriebenen Ausführungsbeispiele aufweist.

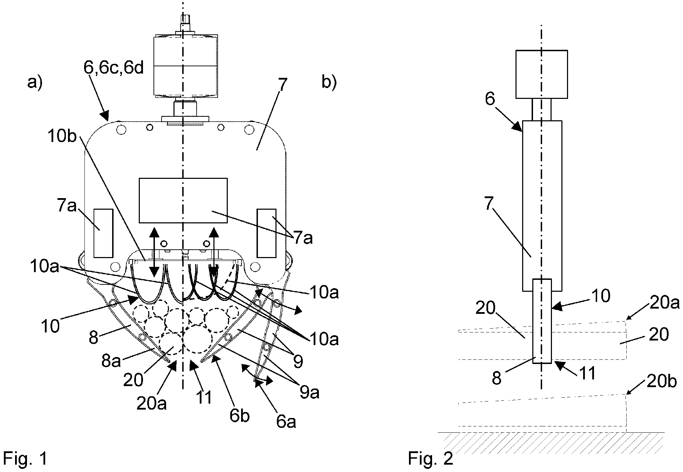

Figuren 1a und 1b zeigen zusammen eine schematische Darstellung einer erfindungsgemäßen Greifereinrichtung 6. Die Greifereinrichtung 6 umfasst einen Greiferkörper 7 und hier zwei Greiferarme 8, 9, die verschwenkbar an dem Greiferkörper 7 aufgenommen sind. Die Greiferarme 8, 9, bilden mit dem Greiferkörper 7 einen Aufnahmeraum 11 zur Aufnahme des stangenförmigen Gemüses 20. Der Greiferarm 9 ist hier in dieser schematischen Ansicht zusätzlich geschlossenen Zustand 6b und einem offenen Zustand 6a dargestellt, um die unterschiedlichen Zustände 6a, 6b zu visualisieren. Zur Bewegung sind hier Aktuatoreinheiten 7a vorhanden, die hier als Servomotoren 7a ausgebildet sind und zum Verschwenken zwischen dem geöffneten Zustand 6b und dem geschlossenen Zustand 6b dienen.

Die Greiferarme 8, 9 sind hier so ausgebildet, dass das eine Mehrzahl 20a und hier eine vordefinierte Menge 20a an im Wesentlichen gleichförmig ausgerichteten stangenförmigen Gemüsestücken 20 durch die Schwenkbewegung vollständig in dem Aufnahmeraum 11 aufnehmbar ist, sodass eine Handhabung der vordefinierten Menge 20a der stangenförmigen Gemüsestücke 20 möglich ist.

Die Greiferarme 8, 9 sind hier schaufelförmig ausgebildet. Weiter weisen die Greiferarme 8, 9 separat verschwenkbare Endbereiche 8a, 9a auf. Die Endbereiche 8a, 9a können hier durch einzelne Gelenke separat gegenüber den restlichen Greiferarmen 8, 9 verschwenkt werden. Dadurch kann noch besser sichergestellt werden, dass die vordefinierte Menge 20a an den stangenförmigen Gemüsestücken 20 vollständig in dem Aufnahmeraum 11 aufnehmbar ist.

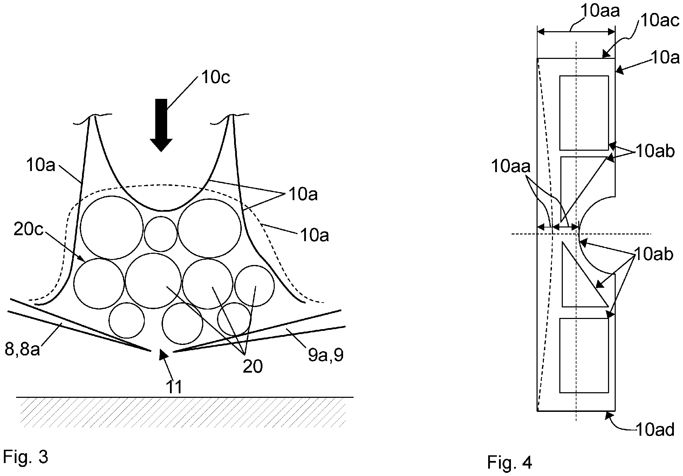

Es ist eine Spanneinheit 10 mit Spannelementen 10a in verschiedenen Ausführungsformen in Figuren 1a und 1b vorhanden. Durch ein Spannelement 10a kann eine Haltekraft 10c, vgl. Fig 3, auf die stangenförmigen Gemüsestücke 20 aufgebracht werden, sodass eine Fixierung der Gemüsestücke 20 in dem Aufnahmeraum 11 möglich ist. Die Spanneinheit 10 kann durch eine Einstelleinheit 10b innerhalb des Aufnahmeraums 11 verfahren werden, sodass aufgenommene stangenförmige Gemüsestücke 20 gegen die Greiferarme 8, 9 und den Greiferkörper festgeklemmt werden können.

In Fig. 1a sind die Spannelemente 10a nebeneinander angeordnet. In Figur 1b sind die Spannelemente 10a teilweise hintereinander angeordnet. Weiter ist schematisch eine Ausführungsform mit einem einzelnen Spannelement 10a als gestrichelte Linie in Fig. 1b skizziert. In allen Ausführungsformen sind die Spannelemente 10a an einer Einstelleinheit 10b aufgenommen und befestigt. Die Einstelleinheit 10b ist verfahrbar und ermöglicht, dass auf die in dem Aufnahmeraum 11 aufgenommene vordefinierte Menge an stangenförmigen Gemüsestücken 20 eine Haltekraft 10c aufbringbar ist. Vorteilhaft wird durch die Mehrzahl an Spannelementen 10a erreicht, dass die Haltekraft 10c noch besser und gleichmäßiger auf alle Gemüsestücke 20 aufgebracht werden kann. Durch die Haltekraft 10c werden die stangenförmigen Gemüsestücken 20 hier vor die Greiferarme 8, 9 gedrückt und dadurch in dem Aufnahmeraum 11 festgeklemmt. Dadurch ist eine sichere Handhabung der Gemüsestücke 20 möglich, auch bei hohen Beschleunigungen und/oder Geschwindigkeiten.

Die Greifereinrichtung 6 ist hier als Gemüsegreifer 6c und hier weiter als Spargelgreifereinrichtung 6d ausgebildet. Die Mehrzahl 20a an stangenförmigen Gemüsestücke 20 in der hier vordefinierten Menge 20a werden hier durch Spargelstangen 20 gebildet.

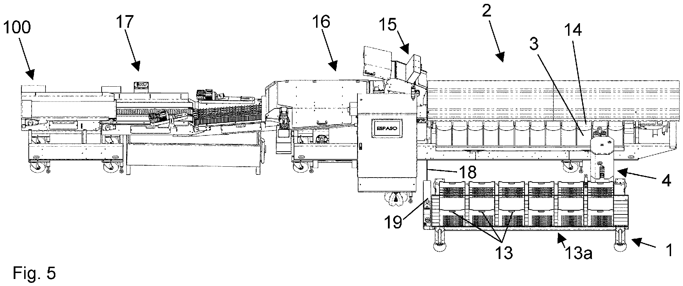

Fig. 2 zeigt eine schematische Seitenansicht der erfindungsgemäßen Greifereinrichtung 6. Die Greifereinrichtung 6 ist in einer Richtung quer zur Verschwenkrichtung der Greiferarme 8, 9 schmal ausgebildet, sodass hier die schematisch dargestellten stangenförmigen Gemüsestücke 20 deutlich über den Aufnahmeraum 11 hinausstehen. Vorteilhaft kann durch die schmale Greifereinrichtung 6 problemlos stangenförmige Gemüsestücke 20 in verschiedenen Längen aufgenommen werden. Die Mehrzahl 20a an aufgenommenen stangenförmigen Gemüsestücken 20a erstrecken sich hier im Wesentlichen parallel zueinander, sodass diese hier im Wesentlichen gleich ausgerichtet sind. Vorteilhaft können die stangenförmigen Gemüsestücke 20 aus der unten dargestellten liegenden Position 20b durch die Greifereinrichtung 6 in dem Aufnahmeraum 11 aufgenommen werden, beispielsweise zur Ablage in einem Sammelbehälter 13, vgl. Fig. 5.

Fig. 3 zeigt eine rein schematische Prinzipskizze zur Darstellung der Funktion der Spanneinheit 10 der Greifereinrichtung 6 mit verschiedenen Spannelementen 10b. Ein Spannelement 10b überträgt hier eine Haltekraft 10c der Einstelleinheit 10b in vertikaler Richtung auf die Gemüsestücke 20. Die gestrichelte Linie symbolisiert eine Spanneinheit 10 mit einem einzelnen Spannelement 10b. Das Spannelement 10b legt sich um eine Kontur 20c der Mehrzahl der stangenförmigen Gemüsestücken 20, hier den Spargelstangen 20. Aufgrund der Steifigkeit des Spannelements 10b wird kann das einzelne Spannelement 10b hier der sprunghaften Änderung in der Kontur 20c der Gemüsestücke 20 nicht folgen. Vor bei allem Gemüsestücken 20 mit kleinem Durchmesser, welche sich zwischen Gemüsestücken 20 mit erheblich größerem Durchmesser befinden, kann hier eine Haltekraft 10c durch das einzelne Spannelement 10b nicht oder nur unzureichend aufgebracht werden. Bei einer Handhabung der Gemüsestücke 20 mit der Greifereinrichtung 6 können solche Gemüsestücke 20 daher leicht aus dem Aufnahmeraum 11 herausfallen. Werden mehrere einzelne Spannelemente 10b genutzt, welche wenigstens teilweise nebeneinander oder auch hintereinander angeordnet sind, kann die Haltekraft 10c durch die einzelnen Spannelemente 10b besser auf die Gemüsestücke 20 übertragen werden, welche hier durch die durchgezogenen Linien dargestellt sind. Dadurch können hier die Gemüsestücke 20 noch sicherer in dem Aufnahmeraum 11 gehalten werden.

Fig. 4 zeigt eine schematische Ansicht eines als Band 10a ausgebildeten Spannelements 10a. Das Spannelemente 10b weisen eine Breite 10aa auf, welche in der Mitte zwischen einem ersten Ende 10ac und einem zweiten Ende 10ad geringer ist als an den Enden 10ac, 10ad. In dem Band 10a sind hier Ausschnitte 10ab und eine Öffnung 10ab vorgesehen. Die Ausschnitte 10ab sind hier rechteckig und dreieckig ausgebildet. Die Öffnung 10ab ist kreisförmig und im Detail halbkreisförmig ausgebildet. Weiter kann sich eine Breite 10aa auch kontinuierlich zwischen dem ersten Ende 10ac und dem zweiten Ende 10ad des Bandes 10a verändern, wie durch die gestrichelte Linie angedeutet.

Fig. 5 zeigt eine rein schematische perspektivische Ansicht einer Spargelsortiermaschine 100 mit einer automatisierten Entnahmeeinrichtung 1 mit einer erfindungsgemäßen Greifereinrichtung 6. Die Spargelsortiermaschine 100 umfasst hier eine Vorlageeinrichtung 17, eine Reinigungs- und Kürzungseinrichtung 16, eine Klassifizierungseinrichtung 15 und eine Sortiereinrichtung 2 sowie die automatisierte Entnahmeeinrichtung 1. Die Spargelsortiermaschine 100 kann auch mehrere Entnahmeeinrichtungen 1 umfassen, die beispielsweise hinter längs zu den Entnahmefächern 3 angeordnet sind, sodass jede Entnahmeeinrichtung 1 für einen Teil der Entnahmefächer 3 zuständig ist.

Die Vorlageeinrichtung 17 umfasst Transportbänder mit Mitnehmern, zwischen welche die einzelnen Spargelstangen 20 per Hand eingelegt und auf die Verarbeitungsgeschwindigkeit gebracht werden. Anschließend werden die Spargelstangen 20 in der Reinigungs- und Kürzungseinrichtung 16 von Erde und Schmutz befreit. Außerdem werden die Spargelstangen 20 auf das Verkaufsmaß gekürzt.

Anschließend werden die einzelnen Spargelstangen 20 in der Klassifiziereinrichtung 15 nach einer Vielzahl an Bewertungskriterien, wie dem Durchmesser, der Länge und der Gradheit und dem Gewicht, klassifiziert.

Anhand der Bewertungskriterien erfolgt die Sortierung des Spargels in der Sortiereinrichtung 2. Die klassifizierten Spargelstangen 20 werden entlang einer Transportrichtung transportiert und gezielt in einem zugeordneten Entnahmefach 3 abgelegt, basierend auf den Bewertungskriterien.

Eine Wiegeeinrichtung 14 ermittelt das Gewicht der Spargelstangen 20 in dem Entnahmefach 3. Wenn ein Zielgewicht in einem Entnahmefach 3 erreicht ist, wird über eine Schnittstelleneinheit, die hier ein Datenkabel 18 umfasst, an die Steuereinrichtung 19 der Entnahmeeinrichtung 1 übermittelt.

Die sortierten Spargelstangen 20 wird aus dem Entnahmefach 3 der Sortiereinrichtung 2 durch die Greifereinrichtung 6 entnommen, welche an einer Robotereinrichtung 4 der Entnahmeeinrichtung 1 entnommen ist.

Die automatisierte Entnahmeeinrichtung 1 ist hier über ein Datenkabel 18 einer Schnittelleneinheit mit der Sortiereinrichtung 2 verbunden. Dadurch kann eine Information an die Entnahmeeinrichtung 1 übermittelt werden, dass die sortierten Spargelstangen aus dem Entnahmefach 3 entnommen werden kann. Weiter verfügt die Entnahmeeinrichtung 1 über separate Sensoren zur Steuerung der Bewegung der Entnahmeeinrichtung 1 und vor allem der Robotereinrichtung 4. Bei mehreren Entnahmeeinrichtungen 1 können diese auch untereinander verbunden sein, beispielsweise um eine Bewegung der Robotereinrichtungen 4 zu koordinieren und Kollisionen der Roboterarme 5 zu vermeiden.

Es kann weiter eine hier nicht dargestellte Verpackungseinrichtung vorhanden sein. Die sortierten Spargelstangen 20 können durch die Entnahmeeinrichtung 1 der Verpackungseinrichtung zugeführt werden.

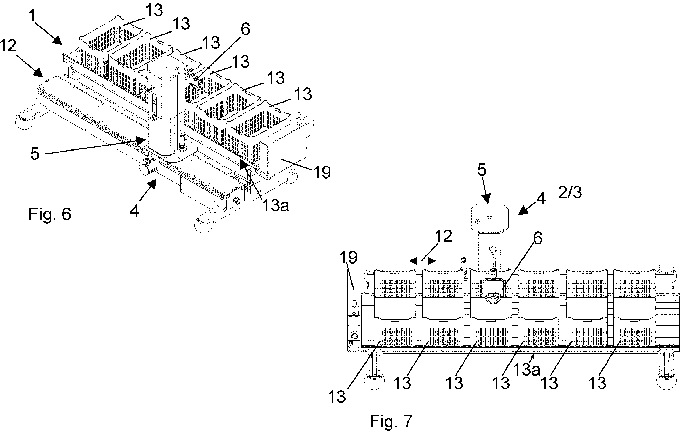

Fig. 6 zeigt eine rein schematische perspektivische Ansicht der automatisierten Entnahmeeinrichtung 1 mit einer erfindungsgemäßen Greifereinrichtung 6. Die automatisierte Entnahmeeinrichtung 1 weist hier eine Robotereinrichtung 4 auf, an welcher die Greifereinrichtung 6 aufgenommen ist. Die Robotereinrichtung 4 umfasst hier einen Roboterarm 5 mit mehreren Schwenkachsen und der Greifereinrichtung 6 zur Aufnahme der Spargelstangen 20 aus den Entnahmefächern 3 der Sortiereinrichtung 2. Weiter umfasst die Robotereinrichtung 4 hier eine Portaleinheit 12, durch welche der Roboterarm 5 entlang der Sortiereinrichtung 2 verfahren werden kann, um die Spargelstangen 20 aus den verschiedenen Entnahmefächern 3 zu entnehmen. Weiter umfasst die Sortiereinrichtung 2 einen Sammelbereich 13a mit Sammelbehältern 13, in welche die klassifizierten und sortierten Spargelstangen 20 abgelegt werden.

Fig. 7 zeigt eine rein schematische Draufansicht auf die automatisierte Entnahmeeinrichtung 1. An dem zum Roboterarm 5 gegenüberliegenden Sammelbereich 13a können die Sammelbehälter 13 entnommen und abtransportiert werden. Vorteilhaft können die Spargelstangen 20 durch die Entnahmeeinrichtung 1 automatisiert aus den Entnahmefächern 3 der Sortiereinrichtung 2 entnommen und in den Sammelbehältern 13 nach Bewertungskriterien klassifiziert abgelegt werden.

Durch die automatisierte Entnahmeeinrichtung 1 werden die in den Entnahmefächern 3 vorhandenen abgelegten Spargelstangen 20 aus den Entnahmefächern 3 entnommen und in den Sammelbehältern 13 als Zielort 13 abgelegt. Spargelstangen 20 liegen in den Entnahmefächern 3 klassifiziert vor. Die Spargelstangen 20 werden zu einer vordefinierten Menge 20a von 500 Gramm in den Entnahmefächern 3 sortiert. Die stangenförmigen Spargelstangen erstrecken sich in den Entnahmefächern 3 im Wesentlichen entlang einer Richtung und im Wesentlichen parallel zueinander. Zur Handhabung wird die Greifereinrichtung 6 oberhalb der definierten Menge 20a an stangenförmigen Spargelstangen 20 positioniert. Die Greifereinrichtung 6 wird in einen offenen Zustand 6a verschwenkt und die Greifereinrichtung 6 wird so an der vordefinierten Menge 20a zu dem stangenförmigen Spargelstangen 20 positioniert, sodass hier die offenen Greiferarm 8 und der Greiferkörper 7 die in dem Entnahmefach 3 befindlichen Spargelstangen 3 wenigstens teilweise seitlich umfassen. Anschließend werden die Greiferarme 8, 9 geschlossen, sodass alle stangenförmigen Spargelstangen 20 durch die Form der schaufelförmigen Greiferarme 8,9 mit den separat beweglichen Endbereich 8a, 9a in den Aufnahmeraum 11 transportiert und aufgenommen werden. Dann erfolgt die Handhabung der aufgenommenen Spargelstangen 20 zu dem Sammelbehälter 13 als Zielort 13.

Hier erfolgt wieder ein Verschwenken der Greiferarme 8 in einem geschlossenen Zustand 6b, sodass die stabförmigen Gemüsestücke 20 an dem Zielort 13, insbesondere in dem Sammelbehälter 13, vollständig abgelegt werden. Dabei bleibt eine Orientierung der im Wesentlichen gleich ausgerichteten Spargelstangen 20 erhalten.

### Bezugszeichen:

- 1: Entnahmeeinrichtung
- 2: Sortiereinrichtung
- 3: Entnahmefach
- 4: Robotereinrichtung
- 5: Roboterarm
- 6: Greifereinrichtung
- 6a: offener Zustand
- 6b: geschlossener Zustand
- 6c: Gemüsegreifereinrichtung
- 6d: Spargelgreifereinrichtung
- 7: Greiferkörper
- 7a: Aktuatoreinheit
- 8: Greiferarm
- 8a: beweglicher Endbereich
- 9: Greiferarm
- 9a: beweglicher Endbereich
- 10: Spanneinheit
- 10a: Spannelement, elastisches Band
- 10aa: Breite
- 10ab: Ausschnitt, Öffnung
- 10ac: erstes Ende des Bandes
- 10ad: zweites Ende des Bandes
- 10b: Einstelleinheit
- 10c: Haltekraft
- 11: Aufnahmeraum
- 12: Portaleinheit
- 13: Zielort, Sammelbehälter
- 13a: Sammelbereich
- 14: Wiegeeinrichtung
- 15: Klassifizierungseinrichtung
- 16: Kürzungseinrichtung
- 17: Vorlageeinrichtung
- 18: Datenkabel
- 19: Steuereinrichtung
- 20: stangenförmiges Gemüsestück, Spargelstange
- 20a: Mehrzahl an stangenförmigen Gemüsestücken, vordefinierte Menge an stangenförmigen Gemüsestücken
- 20b: liegende Position
- 20c: Kontur der Mehrzahl an stangenförmigen Gemüsestücken
- 100: Spargelsortiermaschine

## Patentansprüche

1. Greifereinrichtung (6) zur Handhabung von einer Mehrzahl stangenförmigen Gemüsestücken (20), insbesondere Spargelstangen (20) umfassend:
- einen Greiferkörper (7); und
- wenigstens ein Greiferarm (8), wobei der Greiferarm (8) verschwenkbar an dem Greiferkörper (7) aufgenommen ist; und wenigstens mit dem Greiferkörper (7) einen Aufnahmeraum (11) zur Aufnahme des stangenförmigen Gemüses (20) bildet; und
- wenigstens eine Aktuatoreinheit (7a) zur Durchführung einer Schwenkbewegung zwischen einem offenen Zustand (6a) und einem geschlossenen Zustand (6b) des Greiferarms (8);
**dadurch gekennzeichnet, dass**
der Greifarm (8) so ausgebildet ist, dass wenigstens die Mehrzahl an im Wesentlichen gleich ausgerichteten stangenförmigen Gemüsestücken (20) durch die Schwenkbewegung vollständig in dem Aufnahmeraum (11) aufnehmbar ist.

2. Greifereinrichtung (6) nach Anspruch 1, wobei der Greiferarm (8) wenigstens bereichsweise schaufelförmig ausgebildet ist und wobei der Greiferarm (8) einen beweglichen Endbereich (8a) aufweist, welcher separat beweglich ist und insbesondere verschwenkbar ist.

3. Greifereinrichtung (6) nach einem der vorhergehenden Ansprüche, umfassend zwei Greiferarme (8, 9), wobei beide Greiferarme (8, 9) verschwenkbar an dem Gehäusekörper (7) aufgenommen sind und mit dem Gehäusekörper (7) den Aufnahmeraum (11) bilden.

4. Greifereinrichtung (6) nach einem der vorhergehenden Ansprüche, umfassend wenigstens eine Spanneinheit (10) mit wenigstens einem Spannelement (10a) und insbesondere einer Mehrzahl an Spannelementen (10a) zur Aufbringung einer Haltekraft (10c).

5. Greifereinrichtung (6) nach dem vorhergehenden Ansprüche, wobei wenigstens ein Spannelement (10a) als elastisch biegsames Band (10a) ausgebildet ist.

6. Greifereinrichtung (6) nach einem der beiden vorhergehenden Ansprüche, wobei das Band (10a) aus einem Kunststoff, insbesondere einem Elastomer, ausgebildet ist.

7. Greifereinrichtung (6) nach einem der drei vorhergehenden Ansprüche, wobei eine Steifigkeit des elastischen Bands (10a) sich wenigstens zwischen einem ersten Ende (10ac) und einem zweiten Ende (10ad) des Bands (10a) verändert.

8. Greifereinrichtung (6) nach dem vorhergehenden Anspruch, wobei das Band (10a) Ausschnitte (10ab) und/oder Öffnungen (10ab) aufweist.

9. Greifereinrichtung (6) nach einem der fünf vorhergehenden Ansprüche, umfassend eine Einstelleinheit (10b) zur Einstellung einer Position wenigstens eines Spannelements (10a) zur Anpassung der Haltekraft (10c).

10. Greifereinrichtung (6) nach einem der vorhergehenden Ansprüche, ausgebildet als Gemüsegreifereinrichtung (6c) und bevorzugt als Spargelgreifereinrichtung (6d).

11. Greifereinrichtung (6) nach einem der vorhergehenden Ansprüche, umfasst von einer Vorrichtung zur Weiterverarbeitung von stangenförmigen Gemüsestücken (20), bevorzugt wenigstens einer automatisierten Entnahmeeinrichtung (1) für eine Spargelsortiermaschine (100) und besonders bevorzugt einer Spargelsortiermaschine (100) mit einer automatisierten Entnahmeeinrichtung (1), umfasst.

12. Verwendung einer Greifereinrichtung (6) nach einem der vorhergehenden Ansprüche 1 bis 11 zur Handhabung einer Mehrzahl an stangenförmigen Gemüsestücken (20) und insbesondere Spargelstangen (20).

13. Verfahren zur Handhabung von einer Mehrzahl (20a) an im Wesentlichen gleich ausgerichteten stangenförmigen Gemüsestücken (20), insbesondere einer vordefinierten Menge (20a) an stangenförmigen Gemüsestücken (20), insbesondere von Spargelstangen (20) mittels einer Greifereinrichtung (6) umfassend einen Greiferkörper (7); und wenigstens einen Greiferarm (8), wobei der Greiferarm (8) schwenkbar an dem Greiferkörper (7) ausgenommen ist; und wenigstens eine Aktuatoreinheit (7a) zur Durchführung einer Schwenkbewegung zwischen einem offenen Zustand (6a) und einem geschlossenen Zustand (6b) des Greiferarms (7), wobei der Greifarm (7) so ausgebildet ist, dass die Mehrzahl (20a) an im Wesentlichen gleichförmig ausgerichteten stangenförmigen Gemüsestücken (20) durch die Schwenkbewegung in dem Aufnahmeraum (11) aufnehmbar ist, sodass eine Handhabung der vordefinierten stangenförmigen Gemüsestücke (20) möglich ist; umfassend wenigstens die nachstehenden Verfahrensschritte:
- bereitstellen einer Mehrzahl (20a) an stangenförmigen sortierten Gemüsestücken (20), insbesondere einer vordefinierten Menge (20a) in liegender Position (20b); und
- positionieren des Greifereinrichtung (6) oberhalb der definierten Menge (20a) an stangenförmigen Gemüsestücken (20);
- insbesondere Durchführung einer Schwenkbewegung des wenigstens einen Greiferarms (8) in einen offenen Zustand (6a);
- positionieren des Aufnahmeraums (11) der Greifereinrichtung (6) an der vordefinierten Menge (20a) von stangenförmigen Gemüsestücken (20), sodass der Greiferarm (8) im offenen Zustand (6a) und der Greiferkörper (7) die stangenförmigen Gemüsestücke (20) wenigstens teilweise umfassen; und
- Durchführung einer Schwenkbewegung des wenigstens einen Greiferarms (8) in einen geschlossenen Zustand (6b), sodass die vordefinierte Menge (20a) an stangenförmigen Gemüsestücke (20) in den Aufnahmeraum (11) transportiert und aufgenommen werden; und
- insbesondere Handhabung der aufgenommenen vordefinierten Menge (20a) aus sortiertem stangenförmigen Gemüsestücken (20), insbesondere der Spargelstangen (20).

14. Verfahren nach dem vorhergehenden Anspruch, wobei auf die in dem Aufnahmeraum (11) aufgenommen stangenförmigen Gemüsestücke (20) wenigstens durch ein Spannelement (10a) einer Spanneinheit (10) eine Haltekraft (10c) aufgebacht wird.

15. Verfahren nach einem der beiden vorhergehenden Ansprüche, wobei eine Aufnahme aus wenigstens einem Entnahmefach (3) einer Spargelsortiermaschine (100) erfolgt und/oder wobei eine Handhandhabung der Menge (20a) an stabförmigen Gemüsestücken (20) zu einem Zielort (13), insbesondere zu einem Sammelbehälter (13), erfolgt; und wobei insbesondere eine Verschwenkung des Greiferarms (8) in einen offenen Zustand (6a) erfolgt, sodass die stabförmigen Gemüsestücke (20) an dem Zielort (13) vollständig, insbesondere in dem Sammelbehälter (13), abgelegt werden.
